# EUROPEAN PATENT APPLICATION

(11) **EP 4 541 912 A1**
(43) Date of publication of application: **23.04.2025**
(21) Application number: 24386106.9
(22) Date of filing: 10.09.2024
(51) Int. Cl.: C22B 3/14, B01D 9/00, C01G 9/00, C22B 7/02, C22B 15/00, C22B 3/00, C22B 19/30, C22B 19/34

(54) **HYDROMETALLURGICAL METHOD FOR THE PRODUCTION - RECOVERY OF COPPER AND ZINC FROM EAF DUST AND PYROMETALLURGY SLUG, WITH THE USE OF ORGANIC AND INORGANIC, PROTOTYPE, SYNTHETIC AQUEOUS SOLUTIONS**

(30) Priority: 17.10.2023 GR 20230100855
(71) Applicant: Argyropoulos, Sokratis, 54630 Thessaloniki (GR)
(72) Inventor: Argyropoulos, Sokratis, 54630 Thessaloniki (GR)

(57) **Abstract**

A Method is provided for the hydrometallurgical production of Copper and Zinc from EAF dust and Pyrometallurgy Slug and other similar type secondary concentrates - residues of production processes, with high concentrations of Copper and Zinc.

By applying the proposed method, the hydrometallurgical production of Copper and Zinc is possible efficiently, from the specific materials, which come from pyrometallurgical methods of metal production.

This specific method enables the hydrometallurgical extraction - production of Copper and Zinc from the specific residues of the pyrometallurgical processes, with the use of prototype chemical solutions, and a processing line, which until now could not be processed efficiently and basically remained unused, due to low concentrations or due to the chemical compounds in which the metals were found and make them unrecoverable.

## Description

### Technical field

The present invention concerns the hydrometallurgical production of Copper and Zinc from EAF dust and Slug of pyrometallurgy and other similar type of production process residues, with high concentrations of Copper and Zinc. By applying the proposed method, the hydrometallurgical production of Copper and Zinc is possible efficiently, from the specific materials, which come from pyrometallurgical production processes.

### Existing state of the art

### Wealz Zinc Recovery Method

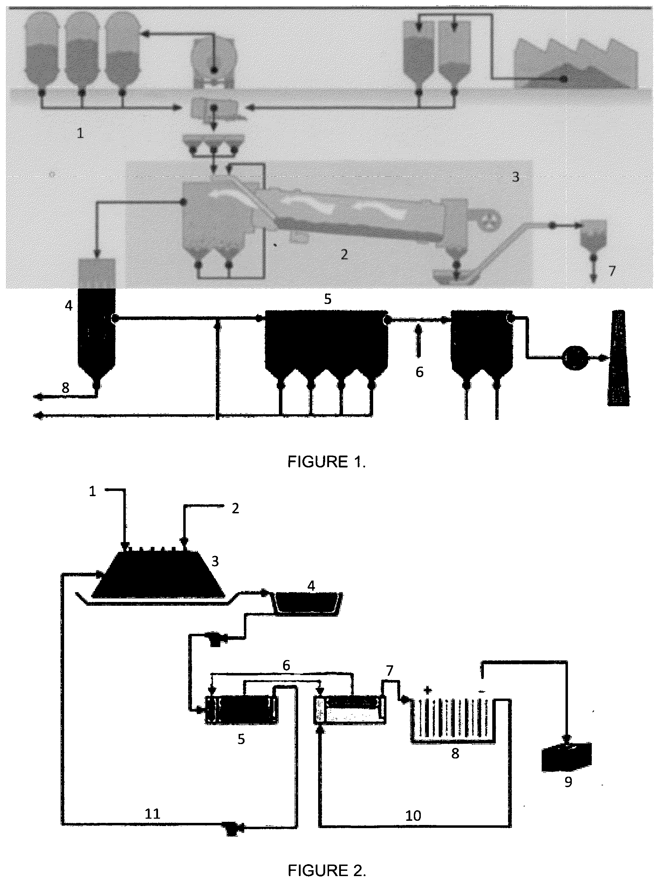

In this method, metal oxides are reduced and zinc, lead and cadmium metals are sublimated. The Waelz method takes place in a rotary kiln, in which the powder is heated together with a reducing agent (usually coke). The furnace rotates at a slow rate and the residence time of the feed varies between 8 and 10 hours. The furnace can be divided into 4 zones: the feed drying zone, the reductant and feed combustion zone, the reduction reaction zone and the slag zone. During the process of reducing the oxides, zinc, lead and cadmium are sublimated and led to a gas collection system, where, reacting with atmospheric oxygen, they are solidified and collected as oxides. Each pyrometallurgical method is based on the Waelz method in terms of process chemistry, with variations in their technological application. Figure 1 shows the flow diagram of the Waelz method. Initially there is the storage and supply area for the raw materials (1). These are then fed to the Waelz furnace (2), in the production area (3). Slag (7) is produced from the exit of the furnace, while the metals, in gaseous form, exit from the other side of the furnace. The metals end up in a device in contact with the atmospheric air, where they exit the current from the furnace exhaust gases, while the rest of the exhaust gases are led to a filter device (5), where an adsorber (6) is then added to collect the gases pollutants, before the air stream ends up in the atmosphere.

### Copper production - recovery method

Exploitation of copper-poor ore, mainly oxides, is done by the Leaching method, which is a pre-stage of hydrometallurgy. This beneficiation method is based on the dissolution and extraction of copper from the ore usually using acids (e.g. dilute H2SO4). Alternatively, it is also called biochemical extraction or leaching. This type of beneficiation belongs to hydro-metallurgy. Hydro-metallurgy is the branch of extractive metallurgy that deals with the production (extraction) of metals, alloys or pure chemical compounds of metallic elements from minerals or other raw materials, using aqueous solutions at relatively low temperatures. The metal or alloy or chemical compound is usually recovered by electrolysis or by precipitation into the solution. Hydro-metallurgical processes are used not only for the production of non-ferrous metals such as copper but also metals such as nickel, cobalt, lead, gold and silver. In some cases, hydro-metallurgical processes are used in combination with pyro-metallurgical, as in the case of aluminum or zinc.

Specifically, for copper, the first application of hydro-metallurgy on an industrial scale took place in the mid-18th century in Spain for the exploitation of copper ores near the Rio Tido ("Red River"). Already during the Renaissance, the miners of Rio Tito had noticed that when they left the sulphide copper-ores they mined in the area for a long time exposed to the air, then from the rainwater, "vitriol" was created near the piles of copper-ores. ». That is, a solution of sulfuric acid (H₂SO₄), ferrous sulfate (FeSO₄), and copper sulfate (CuSO₄) had been created. The Spanish miners began to systematically produce metallic copper, therefore, from "vitriol", with the addition of metallic iron.

The chemical reaction described above is as follows:

**Fe°(s) + CuSO₄(aq)** → **Cu°(s) + FeSO₄(aq).**

Today, the procedure followed for the recovery of copper with this particular method is as follows:
1. First the copper ore is sprayed with sulfuric acid. The sulfuric acid is adsorbed and passes through the pile and dissolves the copper.
2. Then the metal bearing solution is collected in a tank.
3. The solution is transferred to a facility to extract the organic solvent where after reaction complexes are formed dissolved in an organic phase.
4. The copper-saturated organic phase continues to the release facility, where it is contacted with the organic acid solvent which re-extracts the copper into the aqueous phase resulting in a concentrated and clear solution. The organic solvent is regenerated and returned to the 3rd stage.
5. The electrolyte is pumped into electrorecovery cells, at the cathodes where copper is deposited with a purity of 99.9%. The acid produced is returned to the sterile electrolyte in stage 4.

Figure 2 shows the flow diagram of the hydrometallurgical process for the production of Copper. More specifically, the extraction pile (3) is first created, where there is the ore (1) to which sulfuric acid (2) is added. The resulting solution is initially stored in the metal bearing solution tank (4). The solution is then led to the organic solvent solution cleaning tank (5), where organic solvent (6) is added. The resulting acid solution, which is poor in CuSO₄, is recirculated to the extraction stack. The process produces CuSO4 electrolyte, which is taken to the electrolysis stage (8). At this stage, pure copper is produced in the form of cathodes (9). The CuSO₄-poor electrolyte solution is recirculated to the solvent tank.

### Advantages of invention

1. Production - recovery of metal, from materials from which conventional methods cannot extract Zinc or Copper, due to their very small concentrations.
2. Production - recovery of metal, from materials from which conventional methods cannot extract Zinc or Copper, due to the chemical bonds and compounds in which the metals are found and make them unrecoverable.
3. The produced metals have a high degree of purity that exceeds the average degree of purity achieved by existing technologies.
4. The recovery rate of the specific metals exceeds 85%, even if their concentration in the starting material is less than 0.40%.
5. The energy consumption of the proposed production line is low compared to pyrometallurgical processing methods.
6. During the production process, atmospheric CO₂ is sequestered, as well as part of the produced CO₂, resulting from the unit's supporting equipment (steam boiler).
7. The circular economy and the saving of primary mineral resources are promoted, through the sequestration of metals in a percentage of more than 85% even when their concentrations are very small.

### Disclosure of invention

The processing line of the two (2) materials is the same, in its basic stages, but the chemical reagents used and their quantities per application and the process, in some individual sections, differ.

### EAF dust treatment line

In this particular material, because the concentrations of Copper are very small, which cannot be exploited economically, so the process is aimed to the production of Zinc. The proposed Zinc production application has the following sub-stages:
1. Pre-processing - preparation of incoming materials
2. Metal separation stage - chemical etching
3. Metal production stage - mixing and chemical flotation
4. ZnO production line
5. Zinc production line (ZnCO₃) - thermal crystallization

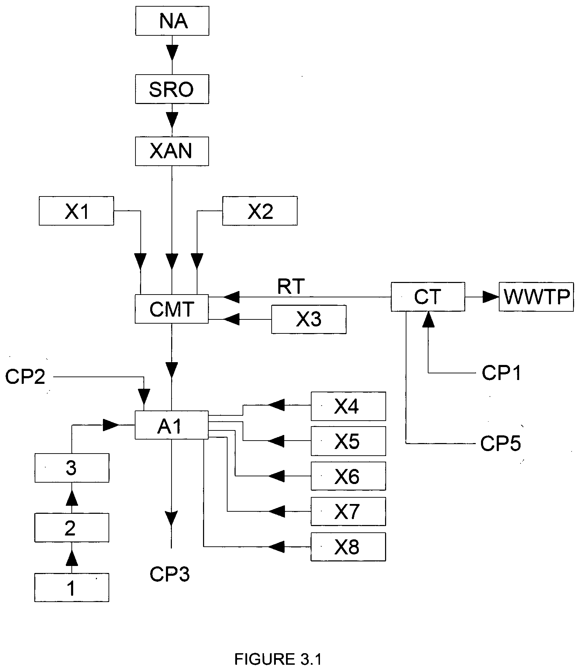

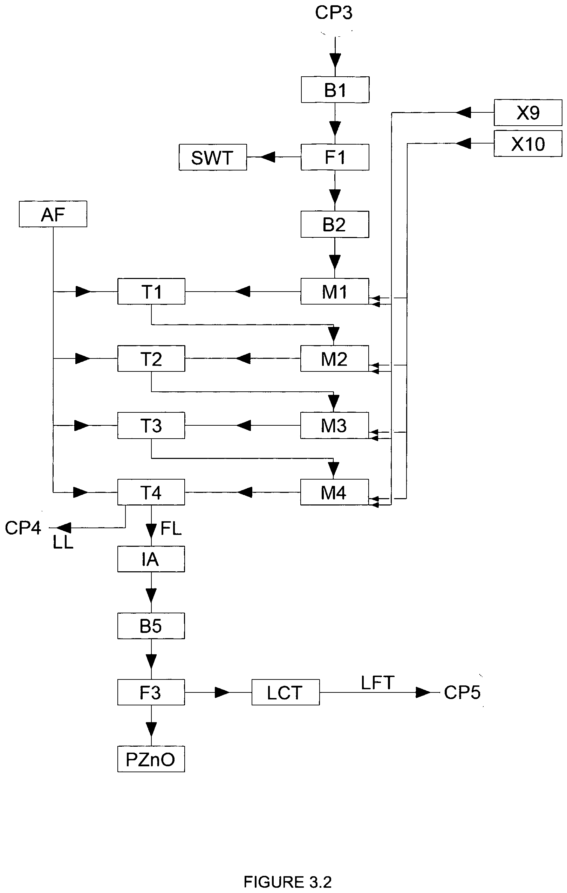

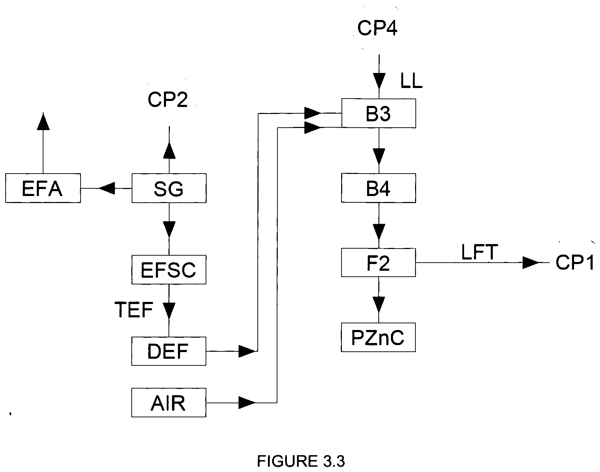

Figure 3 shows the process flow diagram for the production of Copper and Zinc from EAF Dust.

### Pretreatment of incoming materials

The feed of the processing line, with material to be processed, will be carried out by a loader, which will feed the material into a hopper (1). The reception hopper will be, in its lower part, equipped with a mechanism for "breaking" aggregates (jaw crusher) (2). The crusher is placed, in order to reduce the size of the incoming materials, in a particle size of less than 30.00 mm. By feeding the hopper, the material will be guided, using a conveyor belt, to a belt scale, to weigh the incoming material, and this in turn a delumber hopper. The delumber is also a type of crusher, which is used and will then be fed into a ball mill, to reduce the size to the desired size. The desired particle size value is 50 µm.

In order to achieve this granulometry in this particular machine, water will be added in a ratio of approximately 50% - 50% with the incoming material. The use of water is due to the very small particle size (≤ 50µm), where only through the use of water, the material can be transferred to the next stage. The water, along with the material, exits the outlet end of the ball mill and ends up in a separation screw. The special construction of the screw allows the separation of particles with a dimension > 50µm from those with a dimension ≤ 50µm, as a result of which the particles with a dimension > 50µm return to the entrance of the ball mill, while those with a dimension ≤ 50µm, together with the water, end up in a small tank of suitable capacity and from there with a pump to be led to the gyroscopic sieve of suitable capacity (3). In the gyroscopic sieve (3), a mechanical size separation of the incoming material will take place, so that the particles with a diameter ≤ 50µm continue to the next stage. The larger diameter material will exit the screen and end up on the separation screw to return back to the ball mill inlet to be passed through again.

The material of suitable diameter, together with the water, will pass through the sieve and will be concentrated in a small tank of suitable capacity, from where it will initially be fed to a collection tank (buffer). From the collection tank, in which there will be agitation, so that the solids continue to remain in suspension, the liquid will be fed to the separation reactor (A1), using a transfer pump.

### Metal separation stage - chemical etching

The metal separation and chemical etching stage is carried out in a suitable reactor (A1). The operating cycle of the reactor (A1) is as follows: transfer and filling of the water-raw material solution, from the collection tank (buffer), at the same time filling with a mixture of water and chemicals, from the chemical preparation tank (CMT), and tap water (X4) until the total volume of the water - raw material - chemical mixture, inside the reactor (A1), reaches inside the tank the desired capacity, process of treatment of the solution, discharge of the reactor to the concentration tank (B1). Upon completion of each processing cycle, the same processing cycle begins again. The reactor (A1) is fed in each operating cycle, with a material/water-chemical ratio of 2:11. The chemical mixture is prepared for each operating cycle, in a chemical preparation tank (CMT). In more detail, the processing process in each operating cycle at this stage is as follows:
Initially, the filling of the reactor (A1) with the chemicals begins. Chemicals are prepared in a specific proportion, in the chemical preparation tank (CMT). The preparation of the liquid processing solution (Activated Dissolver) is carried out in the chemical preparation tank CMT. Upon completion of the preparation of this solution, it is pumped into the reactor (A1). In the tank (CMT), the following chemicals are supplied, for the preparation of the treatment solution (Activated Dissolver), in appropriate proportions:
Aqueous solution NH₃ < 25% (X1), (NH4)₂CO₃, powder (X2), (NH4)₂SO₄, powder (X3), deionized water (XAN) and NH₃ solution, which is the leachate return(LFT, RT) of the final filter presses, producing the final Zinc products of ZnO and ZnCO₃. Deionized water, for the reactor (A1), is produced from the Reverse Osmosis Unit (SRO), which uses tap water (NA).

Upon completion of the supply of chemicals and tap water (X4), filling in the reactor (A1), agitation begins as well as the addition of the material to be treated.

Upon completion of the reactor filling, the main processing stage begins, which requires a total of 6.00 hours. During this stage, the following chemicals are added to the reactor:
NaOH 50% (X5), Sodium Aluminate (X6), EDTA (X7) and Methasulfonate acid (X8). The pH of the process is 12.50. The addition of Sodium Aluminate (X6) and NaOH 50% (X5), it is done in order to maintain the pH at the desired value, during the process and also to remove contaminants. During this time there is heating of the reactor, so that they maintain a specific temperature of fifty degrees Celsius (50oC), during processing. The reactors are heated by a suitable steam distribution system, which will be produced by a steam boiler (SG). At the completion of the treatment time, the contents of the reactor are emptied into a buffer tank (B1), in which there is agitation and is in a state of readiness for the start of the next treatment cycle. In each treatment cycle, the reactor (A1) is fed with the water - raw material solution from the buffer collection tank, with the water - chemical solution from the chemical preparation tank (CMT) and discharges into the buffer tank (B1).

The liquid, from the reactor (A1), after completing its treatment, will be transferred to the buffer tank (B1). From the buffer tank (B1), the liquid will be fed, using a suitable pump to the filter press (F1), of suitable capacity, in order to separate the liquid from the solid phase of the solution. From the dehydration in the filter press (F1), two products will be produced: the solid residue (SWT), which is sent to management (for disposal or to be processed again) and the liquid, in which the separated metals will be found and which will is stored in the buffer tank (B2), of suitable capacity, for controlled feeding in the next treatment stage. The leachates from the filter press (F1) will initially be collected in a transfer buffer tank of suitable volume and from there by pump it will be sent to the buffer tank (B2).

The reactor system (A1) will be of closed type. It will have vents of the appropriate type, so that in case there is an increase in pressure inside the reactor, it can be relieved from a specific point. At each relief point of the reactor (A1), there will be a gas inlet and a collection network, which will end in a gas decontamination system, which will consist of one (1) liquid scrubber and one (1) activated carbon filter, in series connection, so that there is complete treatment of the gaseous stream before it is discharged into the atmosphere.

### Metal production stage - mixing and chemical flotation

From the buffer tank (B2), the liquid is fed, with a constant flow, to a group of reactors, of a suitable volume, using a pump. These reactors are connected to each other in series and the liquid passes through all of them, until its final exit from them. In this arrangement there are four mixing tanks (M1, M2, M3, M4) and four separation tanks (T1, T2, T3, T4). The liquid first enters the tank (M1) and is transferred to the other tanks in the following order: M1, T1, M2, T2, M3, T3, M4, T4. From the mixing tanks to the separation tanks, the liquid will be transferred using a transfer pump. Mixing tanks M1, M2, M3 and M4 have agitators and the following chemicals are added: Methyl isobutyl carbinol (X9), and Sodium Dimethyl Dithiocarbonate (SDD) (X10).

In the separation tanks T1, T2, T3 and T4, flotation is carried out by adding atmospheric air, through a suitable blower (AF), to all four tanks simultaneously, to produce foam, containing ZnO, which overflows into each tank and is collected separately in the buffer tank (B5). From the separation tanks T1, T2, T3, and T4, the floats in each tank will overflow to the buffer tank (B5), while the liquid exits from the separation tank (T4), to the buffer tank (B3). In the buffer tank (B5), the stream from which ZnO will be produced is collected, while in the buffer tank (B3), the stream from which Zinc will be produced in the form of ZnCO₃ is collected.

### ZnO production line

From the buffer tank (B5), the collected foam, using a suitable pump, is fed to the Filter press (F3). During the dehydration process, the solid final product of Zinc oxide (ZnO) (PZnO) is obtained, which is collected in bins and the liquid leachate, which is led to a buffer tank (LCT) and subsequently for final treatment as waste and disposal (WWTP) or reuse in the first processing stage (CMT, A1).

### Zinc production line - thermal crystallization

In the buffer tank (B3), with the collection of the liquid, from the previous treatment stage, CO₂ (DEF) and atmospheric air (AIR) are also added. The CO₂ (DEF) comes from the flue gas stream of the steam boiler (SG), from which a quantity will be diverted and channeled, after treatment in a wet scrubber (EFSG) to clean the flue gas, to the buffer tank (B3). Atmospheric air (AIR) is also introduced with a blower. The tank will be heated with steam, at a temperature of ninety-five degrees Celsius (95°C), so that the separation of the Zinc from its compound with the SDD (X10), Ammonia (X1) and Methyl isobutyl carbinol (X9) be done and also to react with the CO₂ (ΔPK) forming Zn(CO₃)(OH)₆.

Then the liquid from the buffer tank (B3) is fed to the buffer tank (B4) using a transfer pump. From the buffer tank (B4), the liquid is fed to the filter press (F2). Through this process, the solid end product of zinc (PZnC) is obtained, in the form of Zn(CO₃)(OH)₆, while the liquid leachates (LFT) are sent to the Leachate Return Tank (CT). From the tank (CT), with the use of a pump, these can, under conditions, either be returned to the production line and fed to the chemical preparation tank CMT, or sent to the facility's WWTP. The solid zinc product is collected in bins. The chemicals used in the process are:

### Metal separation stage

Aqueous solution NH₃ < 25%, (NH4)₂CO₃, (NH4)₂SO₄, deionized water, tap water, NaOH 50%, Sodium Aluminate, Methasoulfonate acid, EDTA

### Metal production stage

Methyl isobutyl carbinol, Sodium dimethyl dithiocarbonate, CO₂

### Slug treatment line

The proposed Copper and Zinc production application has the following sub-stages:
1. Pre-processing - preparation of incoming materials
2. Metal separation stage - chemical etching
3. Metal production stage - mixing and chemical flotation
4. Copper production line - chemical crystallization
5. Zinc production line - thermal crystallization

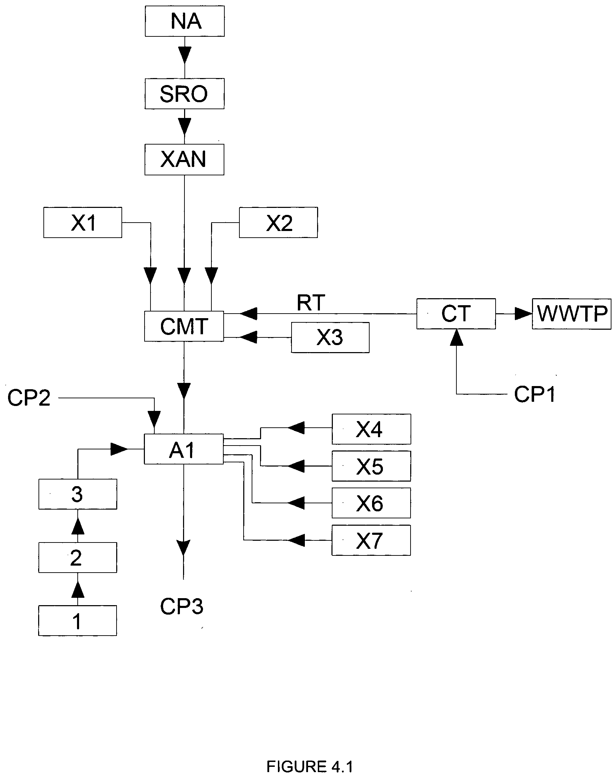

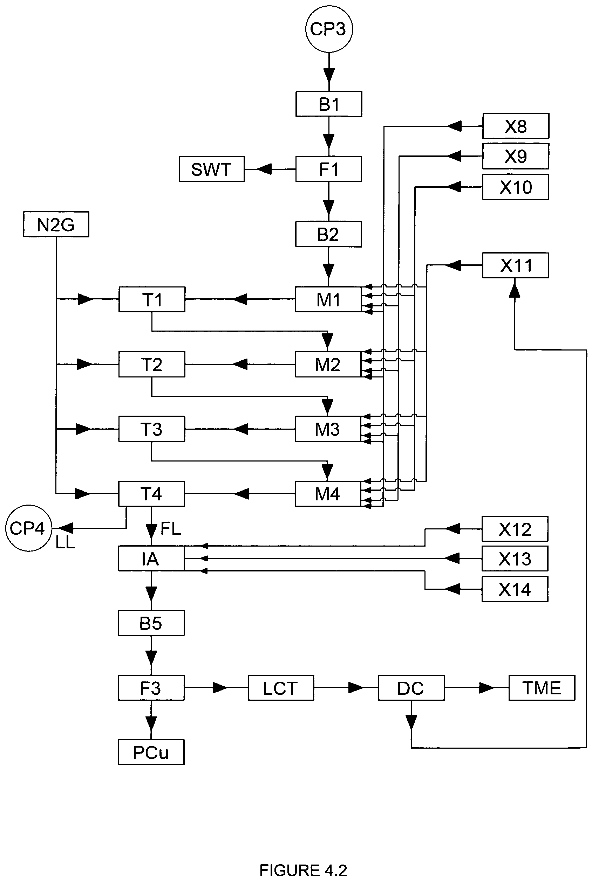

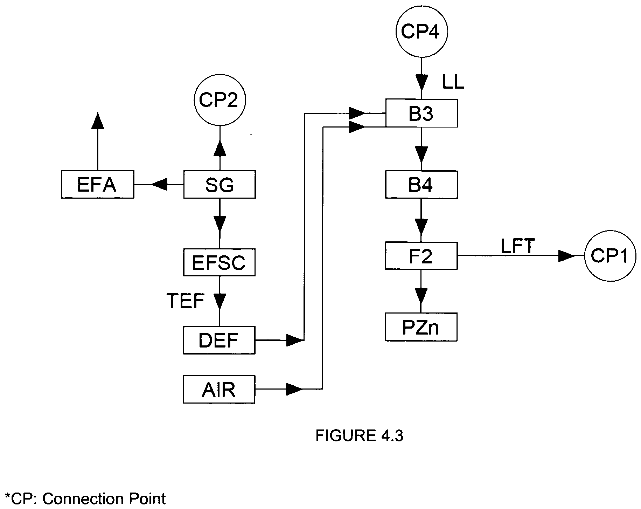

Figure 4 shows the process flow diagram for the production of Copper and Zinc from Slug.

### Pretreatment of incoming materials

The feed of the processing line, with material to be processed, will be carried out by a loader, which will feed the material into a hopper (1). The reception hopper will be, in its lower part, equipped with a mechanism for "breaking" aggregates (jaw crusher) (2). The crusher is placed, in order to reduce the size of the incoming materials, in a particle size of less than 30.00 mm. By feeding the hopper, the material will be guided, using a conveyor belt, to a belt scale, to weigh the incoming material, and this in turn a delumber hopper. The delumber is also a type of crusher, which is used and will then be fed into a ball mill, to reduce the size to the desired size. The desired particle size value is 50 µm.

In order to achieve this granulometry in this particular machine, water will be added in a ratio of approximately 50% - 50% with the incoming material. The use of water is due to the very small particle size (≤ 50µm), where only through the use of water, the material can be transferred to the next stage. The water, along with the material, exits the outlet end of the ball mill and ends up in a separation screw. The special construction of the screw allows the separation of particles with a dimension > 50µm from those with a dimension ≤ 50µm, as a result of which the particles with a dimension > 50µm) return to the entrance of the ball mill, while those with a dimension ≤ 50µm, together with the water, end up in a small tank of suitable capacity and from there with a pump to be led to the gyroscopic sieve of suitable capacity (3). In the gyroscopic sieve (3), a mechanical size separation of the incoming material will take place, so that the particles with a diameter ≤ 50µm continue to the next stage. The larger diameter material will exit the screen and end up on the separation screw to return back to the ball mill inlet to be passed through again.

The material of suitable diameter, together with the water, will pass through the sieve and will be concentrated in a small tank of suitable capacity, from where it will initially be fed to a collection tank (buffer). From the collection tank, in which there will be agitation, so that the solids continue to remain in suspension, the liquid will be fed to the separation reactor (A1), using a transfer pump.

### Metal separation stage - chemical etching

The metal separation and chemical etching stage is carried out in a suitable reactor (A1). The operating cycle of the reactor (A1) is as follows: transfer and filling of the water-raw material solution, from the collection tank (buffer), at the same time filling with a mixture of water and chemicals, from the chemical preparation tank (CMT), and tap water (X4) until the total volume of the water - raw material - chemical mixture, inside the reactor (A1), reaches inside the tank the desired capacity, process of treatment of the solution, discharge of the reactor to the concentration tank (B1). Upon completion of each processing cycle, the same processing cycle begins again.

The reactor (A1) is fed in each operating cycle, with a material/water-chemical ratio of 1:10. The chemical mixture is prepared for each operating cycle, in a chemical preparation container (CMT).

in more detail, the processing process in each operating cycle at this stage is as follows:
Initially, the filling of the reactor (A1) with the chemicals begins. Chemicals are prepared in a specific proportion, in the chemical preparation tank (CMT). The preparation of the liquid processing solution (Activated Dissolver) is carried out in the chemical preparation tank CMT. Upon completion of the preparation of this solution, it is pumped into the reactor (A1). In the tank (CMT), the following chemicals are supplied, for the preparation of the treatment solution (Activated Dissolver), in appropriate proportions:
Aqueous solution NH₃ < 25% (X1), (NH4)₂CO₃, powder (X2), (NH4)₂SO₄, powder (X3), deionized water (XAN) and NH₃ solution, which is the leachate return(LFT, RT) of the final filter presses, producing the final Zinc products. Deionized water, for the reactor (A1), is produced from the Reverse Osmosis Unit (SRO), which uses tap water (NA). Upon completion of the supply of chemicals and tap water (X4), filling in the reactor (A1), agitation begins as well as the addition of the material to be treated.

Upon completion of the reactor filling, the main processing stage begins, which requires a total of 6.00 hours. During this stage, the following chemicals are added to the reactor: NaOH 50% (X5), Sodium Aluminate (X6) and Methasulfonate acid (X7). The pH of the process is 12.50. The addition of Sodium Aluminate (X6) and NaOH 50% (X5), it is done in order to maintain the pH at the desired value, during the process and also to remove contaminants. During this time there is heating of the reactor, so that they maintain a specific temperature of fifty degrees Celsius (50°C), during processing. The reactors are heated by a suitable steam distribution system, which will be produced by a steam boiler (SG). At the completion of the treatment time, the contents of the reactor are emptied into a buffer tank (B1), in which there is agitation and is in a state of readiness for the start of the next treatment cycle. In each treatment cycle, the reactor (A1) is fed with the water - raw material solution from the buffer collection tank, with the water - chemical solution from the chemical preparation tank (CMT), tap water (X4) and discharges into the buffer tank (B1).

The liquid, from the reactor (A1), after completing its treatment, will be transferred to the buffer tank (B1). From the buffer tank (B1), the liquid will be fed, using a suitable pump to the filter press (F1), of suitable capacity, in order to separate the liquid from the solid phase of the solution. From the dehydration in the filter press (F1), two products will be produced: the solid residue (SWT), which is sent to management (for disposal or to be processed again) and the liquid, in which the separated metals will be found and which will be stored in the buffer tank (B2), of suitable capacity, for controlled feeding in the next treatment stage. The leachates from the filter press (F1) will initially be collected in a transfer buffer tank of suitable volume and from there by pump it will be sent to the buffer tank (B2).

The reactor system (A1) will be of closed type. It will have vents of the appropriate type, so that in case there is an increase in pressure inside the reactor, it can be relieved from a specific point. At each relief point of the reactor (A1), there will be a gas inlet and a collection network, which will end in a gas decontamination system, which will consist of one (1) liquid scrubber and one (1) activated carbon filter, in series connection, so that there is complete treatment of the gaseous stream before it is discharged into the atmosphere.

### Metal production stage - mixing and chemical flotation

From the buffer tank (B2), the solution is fed, with a constant flow, to a group of reactors, of a suitable volume, using a pump. These reactors are connected to each other in series and the liquid supplied passes through all of them, until its final exit from them. In this arrangement there are four mixing tanks (M1, M2, M3, M4) and four separation tanks (T1, T2, T3, T4). The liquid first enters the tank (M1) and is transferred to the other tanks in the following order: M1, T1, M2, T2, M3, T3, M4, T4. From the mixing tanks to the separation tanks, the liquid will be transferred using a transfer pump. Mixing tanks M1, M2, M3 and M4 have agitators and the following chemicals are added: Methyl isobutyl carbinol (X8), Ethanol (X9), SDS (X10) and Sodium Dimethyl Dithiocarbonate (SDD) (X11).

In the separation tanks T1, T2, T3 and T4, flotation is carried out by adding nitrogen, through a nitrogen generator (N2G), of suitable nitrogen supply capacity, to all four tanks at the same time, to produce foam, which overflows into each tank and collected separately. From the separation tanks T1, T2, T3, and T4, the floating foam, in each tank, will overflow to the Ion Reactor (IA), while the liquid exits from the separation tank T4, to the buffer tank (B3). In the Ionic Reactor (IA), the stream from which the Copper will be produced is collected, while in the buffer tank (B3), the stream from which the Zinc will be produced is collected. As an option, in the separation tanks T1, T2, T3 and T4, there is the possibility to feed, in addition to Nitrogen, and atmospheric air (ATM). The use of atmospheric air (AF) for flotation in this stage leads to the production of ZnO, which is separated together with CuO during flotation and fed together to the Ion Reactor (IA). This option exists depending on the requested final product, and in this way pure Copper in the form of CuO or a mixture of Copper and Zinc in the form of CuO - ZnO can be produced at the final stage of the process.

### Copper production line - chemical crystallization

The Ion Reactor (IA), in which the foams from the previous stage are fed is filled with Methanol (X12). During the feed of the foam a NaOH 50% solution is added to the foam in order the reactor pH to remain to 11.50, and also EDTA (x14). The ionic reactor (IA) receives the foams until the pH value stabilizes and no adjustment is required using the NaOH 50% (X13) solution. Once the pH has been stabilized in the ionic reactor I(A), the liquid is transferred to the Buffer Tank (B5), of suitable capacity, using a transfer pump and from there using a suitable pump it is fed to the Filter Press (F3). During the dehydration process, the solid final copper product (PCu), (Cu(OH)₂/CuO) is obtained, which is collected in buckets and the liquid leachate, which is sent to a buffer tank (LCT). The produced copper product (PCu) is in solid form, after dehydration, cake type, with a percentage of water. The liquid draining from the buffer tank (LCT) with a pump is fed to a distillation column (DC) in order to recover Methanol (X12), EDTA (X14) and SDS (X10). The recovered Methanol (X12) from the distillation column is collected in a tank (TME) and with a pump is sent to the Methanol storage tank. SDS (X10) and EDTA (X14) are recovered from the bottom of distillation column, they are collected and transferred the SDS storage tank in order to be reused.

### Zinc production stream - thermal crystallization

In the buffer tank (B3), with the concentration of the liquid, from the previous treatment stage, CO₂ (DEF) and atmospheric air (AIR) are also added. The CO₂ (DEF) comes from the flue gas stream of the steam boiler (SG), from which a quantity will be diverted and channeled, after treatment in a wet scrubber (EFSC) to clean the flue gas, to the buffer tank (B3). Atmospheric air (AIR) is also intake with a blower. The tank will be heated with steam, at a temperature of ninety-five degrees Celsius (95°C), so that the separation of the Zinc from its compound with the SDD (X11), Ammonia (X1) and Methyl isobutyl carbinol (X8) and to react with the CO₂ (DEF) formatting Zn(CO₃)(OH)₆. Then the liquid from the buffer tank (B3) is fed to the buffer tank (B4) using a transfer pump. From the buffer tank (B4), the liquid is fed to the filter press (F2). Through this process, the solid end product of zinc (PZn) is obtained, in the form of Zn(CO₃)(OH)₆, while the liquid leachates (LFT) are sent to the Leachate Return Tank (CT). From the tank (CT), with the use of a pump, these can, under conditions, either be returned to the production line and fed to the chemical preparation tank (CMT), or sent to the facility's WWTP. The solid zinc product is collected in bins.

The chemicals used in the process are:

### Metal separation stage

Aqueous solution NH₃ < 25%, (NH4)₂CO₃, (NH4)₂SO₄, deionized water, tap water, NaOH 50%, Sodium Aluminate, Methasulfonate acid

### Metal production stage

Methyl isobutyl carbinol, SDS, SDD, Ethanol, Methanol, NaOH 50%, EDTA, CO₂

### Application example

### Zinc Production from EAF Dust

In this particular example, EAF dust treatment was carried out, with the aim of recovering Zinc. In this particular application, two thousand kilograms (2.000 kg) of EAF dust were treated, using eleven cubic meters (11.00 m³) of initial treatment solution. The table below shows a typical composition of the specific material to be treated as well as the process and consumption of chemicals during application.

**Table 1: EAF dust typical composition**

| **Parameter** | **Unit** | **Value** |
|---|---|---|
| Fe | % κ.β. | 27,80 |
| Zn | % κ.β. | 20,90 |
| Pb | % κ.β. | 2,70 |
| Si | % κ.β. | 2,10 |
| Ca | % K.P. | 4,30 |
| Mn | % κ.β. | 3,20 |
| Cu | % κ.β. | 0,36 |
| Cr | % κ.β. | 0,77 |
| Ni | % κ.β. | 0,06 |
| Ti | % κ.β. | 0,04 |
| Cd | % κ.β. | 0,027 |
| Sb | % κ.β. | 0,069 |
| As | % κ.β. | < 0,10 |
| Cl- | % κ.β. | 0,89 |
| SO4⁻² | % κ.β. | 0,00 |
| Loss of ignition | % κ.β. | 12,18 |

### Metal separation stage:

Activated dissolver production. For the production of one cubic meter (1,00 m³) of activated dissolver, 650 It deionized water, 150 It aqueous solution NH₃ 25,00%, 180,00 kg (NH₄)₂SO₄ and 86,00 kg (NH₄)₂CO₃ are used.

In this application, the solid/liquid ratio is 2:11. The quantities of the components that were used, for the process of two thousand kilograms (2.000 kg) of EAF Dust are the following: 9.000 It tap water, 2.000 It activated dissolver, 15,00 It NaOH 50%, 3,00 It Sodium Aluminate, 0,10 It Methasulfonate acid, 2,00lt EDTA.

### Metal production stage - mixing and chemical flotation

At this stage, the following reagents were used to separate the metals:8,00 It Sodium dimethyl dithiocarbonate (SDD), 0,80lt Methyl isobutyl carbinol.

### ZnO production stage

At this stage, no chemical reagents were used, only mechanical dehydration of the produced foam was done, for the production of ZnO.

### Zinc production stage - thermal crystallization

In this stage no chemical reagents are used and the production of ZnCO3 is done exclusively through the reaction of ZnO, of the previous stage, with the carbon dioxide (CO₂) of the atmospheric air, under heating.

### Copper and Zinc production from pyro metallurgy Slug

In this particular example, pyrometallurgy Slug process was carried out, with the aim of recovering Copper and Zinc. In this particular application, two thousand kilograms (2.000 kg) of Slug were treated, using eleven cubic meters (11.00 m3) of initial treatment solution. The table below shows a typical composition of the specific material to be treated as well as the process and consumption of chemicals during application.

**Table 2: Pyrometallurgy Slug typical composition**

| **A/A** | **Parameters** | **Units** | **Results** | **Method of Analysis** |
|---|---|---|---|---|
| 1 | Total Organic Carbon (TOC) | mg/kg C | 142.0 | In House based on APHA 5310D |
| 2 | Mineral Oils C10-C40 | mg/kg | < 5 | Based on ISO 16703:2004 |
| 3 | Benzene | mg/kg | < 0.02 | EPA 8015C / GC-MS-MS |
| 4 | Toluene | mg/kg | < 0.02 | EPA 8015C / GC-MS-MS |
| 5 | Ethylbenzene | mg/kg | < 0.02 | EPA 8015C / GC-MS-MS |
| 6 | Total Xylene | mg/kg | < 0.02 | EPA 8015C / GC-MS-MS |
| Sum | Sum of BTEX | mg/kg | < 0.02 | EPA 8015C / GC-MS-MS |
| 7 | Cyanide (CN⁻) | mg/kg | < 0.2 | EPA 9013 A |
| 8 | Ammonium Nitrogen (NH₄-N) | mg/kg | < 5 | UV-Vis |
| 9 | Nitrogen N-Kjeldahl | % w/w | 0.02 | Kjeldahl |
| 10 | pH | - | 7.26 | Soil:Water = 1:2, pH-meter |
| 11 | Sulfur (S) | % w/w | 1.014 | LECO-S-932 |
| 12 | Carbon (C) | % w/w | 0.59 | ASTM D 5291:2016 |
| 13 | Hydrogen (H) | % w/w | 0.22 | ASTM D 5291:2016 |
| 14 | Calcium (Ca) | % w/w | 6.7 | |
| 15 | Cadmium (Cd) | mg/kg | 117.8 | |
| 16 | Chromium (Cr) | mg/kg | 104.5 | |
| 17 | Arsenic (As) | mg/kg | 1357.1 | |
| 18 | Copper (Cu) | % w/w | 0.6 | |
| 19 | Aluminum (Al) | % w/w | 2.5 | |
| 20 | Boron (B) | mg/kg | 35.9 | |
| 21 | Cobalt (Co) | mg/kg | 70.6 | |
| 22 | Barium (Ba) | mg/kg | 63.6 | |
| 23 | Iron (Fe) | % W/W | 26.8 | |
| 24 | Potassium (K) | % W/W | 0.4 | Aqua Regia / ICP-OES |
| 25 | Sodium (Na) | % w/w | 0.2 | |
| 26 | Lead (Pb) | % w/w | 3.0 | |
| 27 | Magnesium (Mg) | % w/w | 0.5 | |
| 28 | Manganese (Mn) | % w/w | 0.5 | |
| 29 | Zinc (Zn) | % w/w | 9.1 | |
| 30 | Nickel (Ni) | mg/kg | 59.4 | |
| 31 | Antimony (Sb) | mg/kg | 577.1 | |
| 32 | Molybdenum (Mo) | mg/kg | 49.1 | |
| 33 | Strontium (Sr) | mg/kg | 219.3 | |
| 34 | Titanium (Ti) | % w/w | 0.1 | |
| 35 | Mercury (Hg) | mg/kg | < 2.0 | |
| 36 | Vanadium (V) | mg/kg | 70.6 | |
| 37 | Fluoride (F⁻) | mg/kg | 1.0 | HPLC - Conductivity Det. |
| 38 | Chloride (Cl⁻) | mg/kg | 15.42 | |
| 39 | Nitrites (NO₂⁻) | mg/kg | < 0.50 | |
| 40 | Nitrate (NO₃⁻) | mg/kg | 13.91 | |
| 41 | Sulfates (SO₄⁻²) | mg/kg | 929.21 | |
| 42 | Phosphates (PO₄⁻³) | mg/kg | < 0.50 | |

### Metal separation stage:

Activated dissolver production. For the production of one cubic meter (1,00 m³) of activated dissolver, 550 It of deionized water, 450 It of aqueous solution NH₃ 25,00%, 90,00 kg (NH₄)₂SO₄ and 180,00 kg (NH₄)₂CO₃ are used.

In this application, the solid/liquid ratio is 2:11. The quantities of the components that were used, for the process of two thousand kilograms (2.000 kg) of Slug are the following: 9.000 It tap water, 2.000 It activated dissolver, 15,00 It NaOH 50%, 3,00 It Sodium Aluminate, 0,10 It Methasulfonate acid, 10,00lt EDTA.

### Metal production stage - mixing and chemical flotation

At this stage, the following reagents were used to separate the metals: 1,00 It Sodium dimethyl dithiocarbonate (SDD), 2,00 kg SDS, 0,80lt Methyl isobutyl carbinol, 1,00lt Ethanol.

### Copper production stage - Chemical crystallization

In this stage, for the treatment of the separated foam and the production of CuO/Cu(OH)₂, the following chemical were used: 10.000,00 It Methanol, 15,00 It solution of NaOH 50%, 0,50lt EDTA. The above mentioned consumptions are valid, assuming that the initial amount of methanol, in the tank, was 10,00 m³.

### Zinc production stage - Thermal crystallization

In this stage no chemical reagents are used and the production of ZnCO₃ is done exclusively through the reaction of ZnO, of the previous stage, with the carbon dioxide (CO₂) of the atmospheric air, under heating.

### Interpretation of application results

### Zinc production from EAF Dust

In this particular application, the concentration of Copper is very small, which is not economically advantageous to extract, for this reason the process is focused on the production of Zinc.

According to the composition of the waste, the initial raw material Zinc concentration is 209,00 kgr/tn Zn. The produced amount of Zinc from the application is 178,00 kgr/tn of raw material.

The production - recovery percentage of the metals are presented to the following table:

**Table 3: Efficiency of the application**

| **Metal** | **Initial concentration (kgr/tn)** | **Production (kgr/tn raw material)** | **Efficiency (%)** |
|---|---|---|---|
| **Zinc** | 209,00 | 178,00 | 85,16 |

### Copper and Zinc production from Slug

In this particular application, the concentration of Copper in the raw material was higher than that of Zinc. More specifically, the concentration of Copper and Zinc, in the raw material, as shown by the chemical analysis is 6,00 kgr/tn Cu and 91,00 kgr/tn Zn. The produced amount of Copper and Zinc from this application are 4,92 kgr/tn raw material and 71,89 kgr/tn raw material.

The production - recovery percentage of the metals are presented to the following table:

**Table 4: Efficiency of the application**

| **Metal** | **Initial concentration (kgr/tn)** | **Production (kgr/tn raw material)** | **Efficiency (%)** |
|---|---|---|---|
| **Copper** | 6,00 | 4,92 | 82,00 |
| **Zinc** | 91,00 | 71,89 | 79,00 |

From the above, it can be seen that the specific method is technically and economically efficient as the efficiency in the production of metals is very high, in the specific materials.

## Claims

1. Method of hydrometallurgical production - recovery of Copper and Zinc, with the application of chemical dissolution, chemical flotation, chemical crystallization and thermal crystallization, using prototype chemical solutions, from secondary residues, belonging to the EAF dust and Slug categories of pyrometallurgy or similar secondary residues rich in Copper and Zinc.

2. Method of hydrometallurgical production - recovery of Copper and Zinc, from secondary residues, which belong to the categories EAF dust and Slug pyrometallurgy or similar secondary residues, rich in Copper and Zinc, according to claim 1, where in the stage of chemical dissolution, in the reactor, are used the following reagents: Deionized water, tap water, (NH4)₂SO₄, (NH₄)CO₃, aqueous solutions of NH₃ 25%, NaOH 50%, Sodium Aluminate, EDTA and Methasulfonic acid.

3. Method of hydrometallurgical production - recovery of Copper and Zinc, from secondary residues, belonging to the EAF dust category or similar secondary residues, rich in and Zinc, according to claim 1, where in the stage of chemical flotation in the mixing and flotation vessels the following reagents are used: Sodium Dimethyl Dithicarbonate, and Methyl isobutyl carbinol.

4. Method of hydrometallurgical production - recovery of Copper and Zinc, from secondary residues, belonging to the pyrometallurgy Slug category or similar secondary residues, rich in Copper and Zinc, according to claim 1, where in the stage of chemical flotation in the mixing and flotation vessels the following reagents are used: Sodium Dimethyl Dithicarbonate, Ethanol, SDS and Methyl isobutyl carbinol.

5. Method of hydrometallurgical production - recovery of Copper and Zinc, from secondary residues, belonging to the pyrometallurgy Slug category or similar secondary residues, rich in copper and zinc, according to claim 1, where the following reagents are used in the chemical crystallization stage: Methanol NaOH 50% and EDTA.

6. Method of hydrometallurgical production - recovery of Copper and Zinc, from secondary residues, which belong to the categories EAF dust and Slug pyrometallurgy or similar secondary residues, rich in copper and zinc, according to claim 1, where in the stage of thermal crystallization the required quantities of CO₂, come from the exhaust gases of the steam boiler of the production line, after they pass through a liquid scrubber system for their chemical cleaning.

7. Method of hydrometallurgical production - recovery of Copper and Zinc, from secondary residues, belonging to the pyrometallurgy Slug category or similar secondary residues, rich in Copper and Zinc, according to claim 1, 2, 4, 5 and 6, where the line processing includes the following stages: Pre-treatment, using crusher and sieve, metal separation - chemical etching, metal production - mixing and chemical flotation, copper production - chemical crystallization, Zinc production - thermal crystallization.

8. Method of hydrometallurgical production - recovery of Zinc, from secondary residues, belonging to the EAF dust category or similar secondary residues, rich in Zinc, according to claim 1, 2, 3 and 6, where the processing line includes the following stages: Pre-treatment, using crusher and sieve, separation of metals - chemical attack, production of metals - mixing and chemical flotation, production of ZnO, production of Zinc ZnCO3 - thermal crystallization.
